# FASCICULE DE BREVET EUROPEEN

(11) **EP 1 037 204 B1**
(45) Date de publication et mention de la délivrance du brevet: **23.12.2009**
(21) Numéro de dépôt: 00400673.0
(22) Date de dépôt: 10.03.2000
(51) Int. Cl.: G11B 7/09

(54) **Procédé et dispositif d'asservissement d'un faisceau optique incident sur une piste d'un support mobile d'informations, en particulier un disque numérique**
Verfahren und Vorrichtung zur Lageregelung eines auf einen Datenträger projizierten optischen Strahles, insbesondere auf eine digitale Platte
Servo system and method to servo a beam incident on a moving data carrier in particular a digital disc

(30) Priorité: 16.03.1999 FR 9903237
(43) Date de publication de la demande: 20.09.2000
(73) Titulaire: STMicroelectronics S.A., 92120 Montrouge (FR)
(72) Inventeur: Lebowsky, Fritz, 38410 Corps d'Uriage (FR); Marrec, Sonia, 38420 Meylan (FR)
(74) Mandataire: Casalonga, Axel

(56) Documents cités:
- EP-A- 0 356 201
- EP-A- 0 803 865
- EP-A- 0 822 542
- EP-A- 0 895 227
- WO-A-98/49679
- US-A- 5 808 979

## Description

L'invention concerne l'asservissement d'un faisceau optique incident sur une piste d'un support mobile d'informations contenues dans ladite piste, et plus particulièrement le contrôle et la détermination de l'erreur de positionnement du faisceau incident par rapport à la piste.

L'invention s'applique avantageusement mais non limitativement à des disques numériques, notamment ceux connus sous le vocable de "disque compact" (CDROM : Read Only Memory Compact Disc en langue anglaise) et tout particulièrement les disques numériques multifonctions (DVD : "Digital Versatile Disc" en langue anglaise) stockant de façon comprimée des données d'image.

Un disque numérique comporte une seule piste en spirale dont le relief est représentatif des informations binaires stockées sur la piste du disque. On éclaire par un faisceau optique incident, par exemple un spot laser, la piste du disque et plusieurs photodétecteurs, par exemple quatre, détectent la réflexion du faisceau lumineux sur le disque.

Le capteur optique formé des photodétecteurs délivre alors quatre signaux élémentaires respectivement délivrés par les quatre photodétecteurs, ainsi qu'un signal global, ou signal utile, égal à la somme des quatre signaux élémentaires, signal utile d'où l'on extrait les informations binaires lues sur la piste.

L'asservissement du faisceau optique sur la piste du disque mobile en rotation s'effectue exclusivement à partir des quatre signaux élémentaires délivrés par les photodétecteurs. Plus précisément, on somme les signaux par paires de façon à former deux signaux que l'on égalise dans un égaliseur analogique avant de les mettre en forme, par comparaison avec un seuil, dans deux comparateurs. Les deux signaux ainsi mis en forme sont mutuellement déphasés si le spot laser ne se situe pas sur la piste. On détecte alors la différence de phase entre ces deux signaux, différence de phase qui correspond à l'erreur de positionnement du faisceau par rapport à la piste. Cette erreur de positionnement est alors utilisée classiquement dans une boucle d'asservissement pour modifier le système optique incident et ramener et asservir le faisceau optique sur la piste.

Un tel dispositif de l'art antérieur (voir par exemple EP-A-0822542 qui a servi de support pour la forme en deux parties des revendications 1 et 4) comporte un nombre important de composants analogiques, ce qui est relativement pénalisant d'un point de vue encombrement. Par ailleurs, lorsque la technologie évolue, la modification et la réalisation des nouveaux composants du dispositif nécessitent un temps de conception et de réalisation important.

L'invention vise à apporter une solution à ces problèmes et a notamment pour but d'améliorer la précision dans la détermination de l'erreur de positionnement, tout en s'affranchissant notamment des égaliseurs analogiques.

L'invention permet également de détecter des mésalignements ou déphasages locaux entre les différentes voies analogiques de traitement des signaux délivrés par les photodétecteurs.

L'invention propose une solution radicalement différente de celle existant actuellement, en utilisant notamment le signal global ou signal utile pour la détermination de l'erreur de positionnement du faisceau par rapport à la piste, alors que jusqu'à maintenant, ce signal utile n'était utilisé que pour l'extraction des données.

Plus précisément, l'invention propose un procédé d'asservissement d'un faisceau optique incident sur une piste d'un support mobile d'informations contenues dans ladite piste selon la revendication 1.

Des modes de réalisation de l'invention sont définis dans les revendications dépendantes.

Selon une caractéristique générale de l'invention, on capte le faisceau réfléchi par le disque au moyen d'un capteur optique comportant plusieurs photodétecteurs (au moins deux et en pratique quatre) et on détermine l'erreur de positionnement du faisceau par rapport à la piste à partir des signaux élémentaires respectivement délivrés par les photodétecteurs et à partir du signal global contenant lesdites informations et délivré par ledit capteur.

Selon l'invention, on élabore à partir des signaux élémentaires respectivement délivrés par les photodétecteurs, deux signaux, que l'on dénomme ici "signaux secondaires", dont le déphasage mutuel est représentatif de l'erreur de positionnement du faisceau par rapport à la piste. On élabore également le signal global qui est égal à la somme des signaux élémentaires. On échantillonne les deux signaux secondaires et on sélectionne les échantillons permettant la détermination du déphasage mutuel, en utilisant le signal global.

Plus précisément, selon un mode de mise en oeuvre de l'invention, on échantillonne les deux signaux secondaires à partir d'un signal d'horloge d'échantillonnage, on détecte les transitions du signal global par rapport à un seuil prédéterminé en utilisant un signal d'échantillonnage auxiliaire obtenu à partir dudit signal d'échantillonnage et ayant une période égale à un sous-multiple de la période du signal d'horloge d'échantillonnage et on sélectionne au moins les deux échantillons des deux signaux secondaires qui encadrent temporellement une transition du signal global et dont les niveaux sont les plus proches dudit seuil.

L'invention part en effet en particulier de l'observation que le signal global se situe en théorie toujours entre les deux signaux secondaires et au milieu de ceux-ci. Aussi, le signal global, et plus particulièrement ses transitions par rapport au seuil prédéterminé, vont servir de références de phase. Plus précisément, le fait de sélectionner deux échantillons qui encadrent à peu près symétriquement ladite transition assure, d'une part, que ces deux échantillons sélectionnés appartiennent bien aux deux signaux secondaires et, d'autre part, que le calcul du déphasage à partir de ces deux échantillons sélectionnés conduira à une estimation correcte de l'erreur de positionnement. Et, l'utilisation de ce signal global pour la détermination de l'erreur de positionnement permet de s'affranchir des égaliseurs analogiques de l'art antérieur. En effet, ceux-ci avaient pour but d'égaliser les niveaux des signaux en amplifiant notamment des niveaux ou amplitudes trop faibles. Et, l'utilisation du signal global comme moyen de sélection permet de sélectionner sans erreur des échantillons correspondant à des niveaux de signaux secondaires même faibles.

En fait, il serait possible de calculer le déphasage mutuel des deux signaux secondaires à partir uniquement des deux échantillons sélectionnés, notamment dans le cas où la fréquence d'échantillonnage est élevée. Ceci étant, afin d'augmenter encore la précision de détermination de ce déphasage, et donc de l'erreur de positionnement, il est particulièrement avantageux de sélectionner plus d'un échantillon pour chaque signal secondaire, et ce, notamment si la fréquence d'échantillonnage est relativement faible.

Plus précisément, selon un mode de mise en oeuvre de l'invention, on sélectionne pour chaque signal secondaire au moins deux échantillons situés de part et d'autre dudit seuil prédéterminé et représentatifs pour chaque signal secondaire d'un franchissement dudit seuil par ledit signal secondaire dans le même sens que ladite transition du signal global. On effectue alors une interpolation, par exemple linéaire, entre les deux échantillons sélectionnés de chaque signal secondaire de façon à déterminer, pour chaque signal secondaire, un échantillon calculé dont le niveau correspond audit seuil. On détermine alors l'erreur de positionnement à partir de ces deux échantillons calculés.

L'homme du métier saura aisément choisir l'une ou l'autre de ces variantes en fonction de l'application et du critère de précision envisagés, pour le calcul du déphasage.

L'invention a également pour objet un dispositif d'asservissement d'un faisceau optique incident sur une piste d'un support mobile d'informations contenues dans ladite piste tel que défini dans la revendication 4. Des modes de réalisation de l'invention sont définis dans les revendications 5 à 7.

Ainsi selon une caractéristique générale de l'invention, ce dispositif comprend un capteur apte à capter le faisceau réfléchi par le disque et comportant plusieurs photodétecteurs, ainsi que des moyens de contrôle d'asservissement aptes à déterminer l'erreur de positionnement du faisceau par rapport à la piste à partir des signaux élémentaires respectivement délivrés par les photodétecteurs et à partir du signal global contenant lesdites informations et délivré par le capteur.

Selon l'invention, les moyens de contrôle comprennent :
- des moyens de prétraitement aptes à élaborer à partir des signaux élémentaires respectivement délivrés par les photodétecteurs, deux signaux secondaires dont le déphasage mutuel est représentatif de l'erreur de positionnement du faisceau par rapport à la piste, ainsi que le signal global égal à la somme des signaux élémentaires; et
- des moyens de traitement comportant des moyens d'échantillonnage aptes à échantillonner les deux signaux secondaires, des moyens de sélection aptes à sélectionner les échantillons permettant la détermination du déphasage mutuel, en utilisant le signal global, et des moyens de calcul aptes à déterminer le déphasage mutuel à partir des échantillonés sélectionnés.

Les moyens de contrôle comportent avantageusement un générateur, par exemple un quartz, générant un signal d'horloge d'échantillonnage, tandis que les moyens d'échantillonnage comportent deux convertisseurs analogique/numérique aptes à échantillonner les deux signaux secondaires à partir du signal d'horloge d'échantillonnage.

Les moyens de traitement comportent avantageusement une boucle numérique à verrouillage de phase recevant le signal global et le signal d'échantillonnage et aptes à détecter les transitions du signal global par rapport à un seuil prédéterminé.

Les moyens de sélection sont alors aptes à sélectionner au moins les deux échantillons des deux signaux secondaires qui encadrent temporellement une transition du signal global et dont les niveaux sont les plus proches dudit seuil.

Selon un autre mode de réalisation de l'invention, les moyens de sélection sont aptes à sélectionner pour chaque signal secondaire au moins deux échantillons situés de part et d'autre dudit seuil prédéterminé et représentatifs pour chaque signal secondaire d'un franchissement dudit seuil par le signal secondaire dans le même sens que ladite transition du signal global. Les moyens de traitement comportent alors des moyens d'interpolation aptes à effectuer une interpolation, par exemple linéaire ou non linéaire, entre les deux échantillons sélectionnés de chaque signal secondaire, de façon à déterminer, pour chaque signal secondaire, un échantillon calculé dont le niveau correspond audit seuil. Les moyens de calcul déterminent l'erreur de positionnement à partir des deux échantillons calculés.

Enfin, il est préférable que les moyens de traitement comportent un filtre interpolateur, passe-bas ou médian, relié à la sortie des moyens de calcul, ce qui permet notamment d'interpoler une erreur de positionnement par rapport à deux erreurs de positionnement effectivement calculées, lorsque ce calcul n'est pas possible, par exemple lorsque les deux échantillons des signaux secondaires a priori destinés au calcul de l'erreur de déphasage ne correspondent pas en fait à deux échantillons permettant d'obtenir sans erreur, l'erreur de positionnement.

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 est un synoptique schématique partiel d'un dispositif d'asservissement selon l'invention;
- la figure 2 illustre très schématiquement une partie du dispositif de la figure 1; et
- les figures 3 à 6 illustrent plus particulièrement un fonctionnement du dispositif selon l'invention, permettant une mise en oeuvre du procédé selon l'invention.

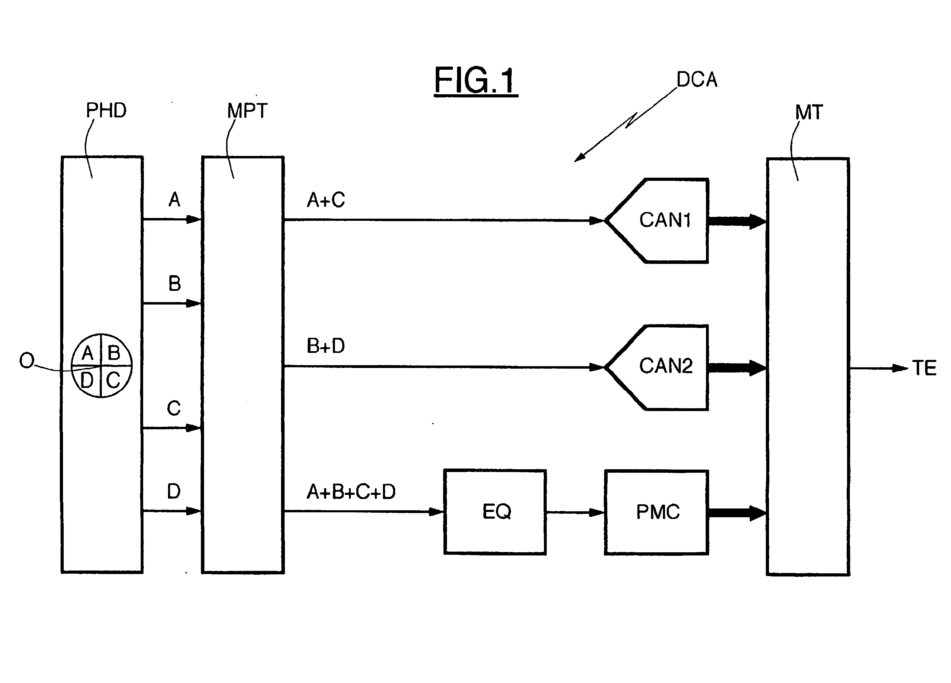

Sur la figure 1, la référence DCA désigne plus particulièrement un dispositif de contrôle d'asservissement selon l'invention, comportant en tête un capteur composé de quatre photodétecteurs A,B,C,D. En pratique, une diode laser émet un faisceau laser qui est dirigé vers la face du disque sur laquelle est gravée la piste contenant les informations, par l'intermédiaire notamment d'une lame séparatrice et d'un système optique classique. Le faisceau réfléchi par le disque traverse alors dans l'autre sens la lame séparatrice et est capté par les quatre photodétecteurs A,B,C,D qui se situent tous les quatre dans un plan parallèle au plan du disque. Chaque photodétecteur délivre un signal que l'on a référencé, à des fins de simplification, par la même lettre que celle affectée au photodétecteur. Ces signaux élémentaires A,B,C,D sont ensuite traités dans des moyens de prétraitement MPT, comportant essentiellement des sommateurs, ces moyens de prétraitement étant de structure connue en soi. Plus précisément, on somme les deux signaux élémentaires délivrés par les deux photodétecteurs symétriques par rapport au centre O du capteur. Ainsi, l'un des signaux secondaires est égal à la somme des signaux élémentaires A et C, tandis que l'autre signal secondaire est égal à la somme des signaux élémentaires B et D.

Par ailleurs, les moyens de prétraitement MPT délivrent le signal global ou signal utile, égal à la somme des quatre signaux élémentaires A, B, C et D. C'est à partir de ce signal utile que seront notamment extraites les informations contenues dans la piste.

Les deux signaux secondaires A+C et B+D sont ensuite respectivement échantillonnés dans deux convertisseurs analogiques numériques CAN1 et CAN2.

Le signal d'horloge d'échantillonnage est délivré par exemple par un quartz (non représenté ici à des fins de simplification) et ce signal d'horloge est également utilisé par une boucle numérique à verrouillage de phase PMC, de structure connue en soi. Cette boucle numérique PMC reçoit le signal global égalisé après passage dans un égaliseur EQ, également de structure connue en soi.

Les moyens PMC reçoivent également le signal d'horloge d'échantillonnage et élaborent un signal d'échantillonnage auxiliaire dont la période T_{PMC} est égale à Te/n où Te est la période du signal d'horloge d'échantillonnage et n un entier. Ils détectent toute transition du signal d'entrée (c'est-à-dire du signal global) par rapport à un seuil prédéterminé SE (par exemple la valeur zéro) et déterminent dans quel intervalle du signal d'échantillonnage auxiliaire se situe ladite transition. Plus précisément, les moyens PMC délivrent en sortie un mot numérique représentatif de la distance ΔT entre toute transition détectée du signal global et le front montant du signal d'horloge immédiatement précédent. En pratique, à titre d'exemple, si la boucle à verrouillage de phase comporte typiquement trente deux inverseurs permettant de subdiviser la période Te du signal d'horloge d'échantillonnage en trente deux intervalles (n = 32), les moyens PMC vont délivrer un mot de cinq bits représentant le numéro de l'intervalle dans lequel se situe la transition, c'est-à-dire en fait la distance entre le front montant du signal d'horloge d'échantillonnage et la transition du signal. Ainsi, un mot numérique égal à 00000 sera représentatif d'une transition en phase avec le front montant du signal d'horloge, tandis qu'un mot numérique égal à 11111 sera représentatif d'une transition se situant juste avant le front montant suivant du signal d'horloge.

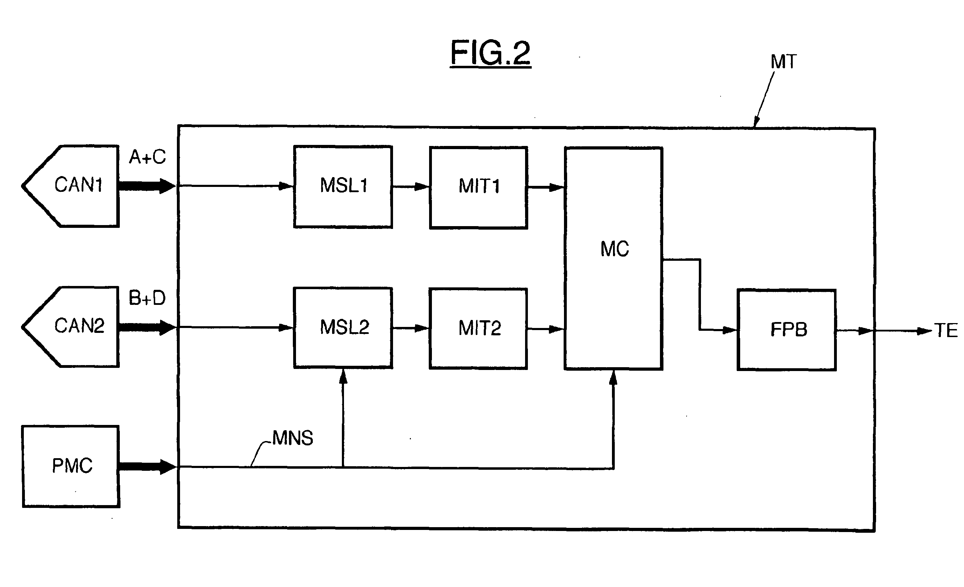

Les signaux de sortie des convertisseurs analogiques numériques CAN1 et CAN2 ainsi que le mot numérique de sortieMNS de la boucle PMC, sont délivrés à des moyens de traitement MT qui vont déterminer l'erreur de positionnement TE du faisceau par rapport à la piste. La structure de ces moyens de traitement est maintenant décrite plus en détail en se référant plus particulièrement à la figure 2.

Les moyens MT comportent essentiellement des moyens de sélection MSL1 et MSL2 recevant les échantillons des signaux A+C et B+D respectivement, ainsi que le signal de sortie MNS délivré par les moyens PMC.

Les moyens MT comportent par ailleurs des moyens dits "d'interpolation" MIT1 et MIT2 reliés à la sortie des moyens de sélection MSL1 et MSL2, la sortie de ces moyens d'interpolation étant reliée à des moyens de calcul MC. Enfin, un filtre interpolateur FPB, typiquement un filtre passe-bas, est relié entre la sortie des moyens de calcul MC et la sortie des moyens de traitement qui délivre l'erreur de positionnement TE.

Les moyens de sélection, d'interpolation et de calcul vont maintenant être décrits fonctionnellement, leur réalisation pouvant être effectuée de façon logicielle au sein d'un contrôleur par exemple. Le filtre passe-bas peut être quant à lui également réalisé de façon logicielle ou bien par un circuit intégré spécifique.

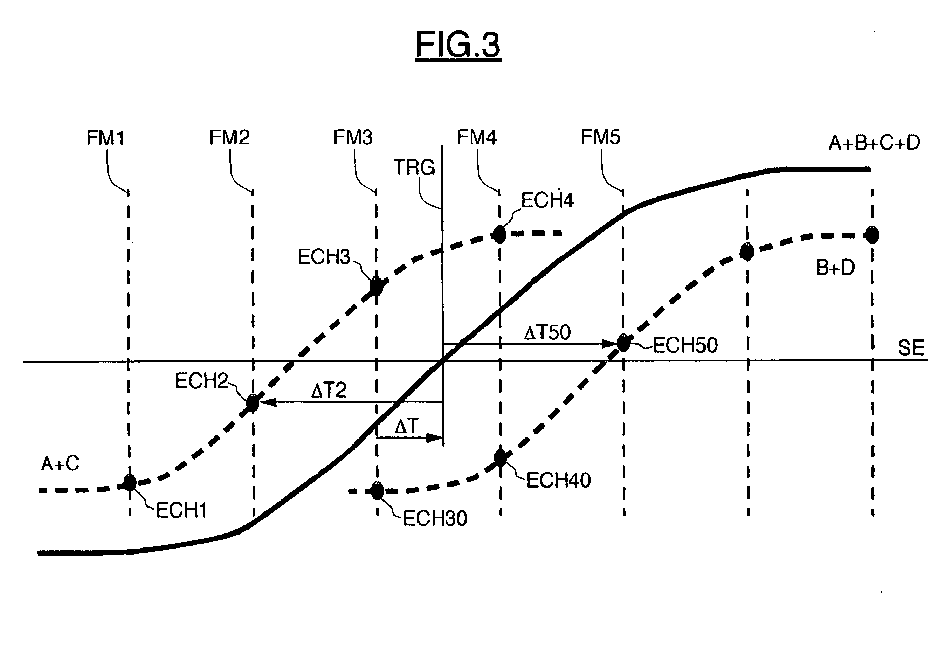

On fait maintenant référence plus particulièrement aux figures 3 à 6 pour décrire le fonctionnement des différents moyens selon l'invention, ainsi qu'une mise en oeuvre du procédé selon l'invention.

Sur la figure 3, les références FM1, FM2, FM3, FM4 et FM5 désignent cinq fronts montants successifs du signal d'horloge d'échantillonnage. Les références ECH1, ECH2, ECH3 et ECH4 désignent les échantillons du signal secondaire A+C délivrés respectivement lors des fronts montants FM1 à FM4. De même, les références ECH30, ECH40 et ECH50 désignent les trois échantillons du signal secondaire B+D respectivement délivrés lors des fronts montants FM3 à FM5.

On suppose ici qu'une transition montante TRG du signal global A+B+C+D (franchissement du seuil SE) a été détectée par les moyens PMC et que l'écart temporel entre le front montant FM3 du signal d'horloge d'échantillonnage et cette transition TRG est égal à ΔT.

En fonctionnement, un certain nombre d'échantillons des deux signaux secondaires sont en permanence stockés dans des moyens de mémoire, par exemple dans deux mémoires du type "premier entré", "premier sorti" (FIFO en langue anglaise) dont la taille détermine le nombre d'échantillons stockés en permanence.

Les moyens de sélection MSL1 et MSL2 vont alors sélectionner parmi les échantillons mémorisés, au moins les deux échantillons (ici ECH2 et ECH50) des deux signaux secondaires dont les niveaux ou amplitudes sont les plus proches du seuil prédéterminé SE, et qui par ailleurs, encadrent symétriquement, à une tolérance prédéterminée près, la transition TRG.

En d'autres termes, on vérifie, pour ces échantillons ECH2 et ECH50, que les distances (temporelles) respectives ΔT2 et ΔT50 entre la transition TRG et ces échantillons ECH2 et ECH50 sont égales à une tolérance près.

L'homme du métier aura noté que les distances ΔT2 et ΔT50 peuvent être aisément calculées puisque le mot numérique de sortie MNS délivré par la boucle PMC fournit la valeur ΔT et que la durée entre deux fronts montants successifs du signal d'horloge d'échantillonnage est connue.

Il serait alors possible par exemple de calculer dès maintenant le déphasage entre les deux signaux secondaires A+C et B+D, en utilisant uniquement les deux échantillons sélectionnés ECH2 et ECH50 et en sommant les valeurs ΔT2 et ΔT50.

Bien entendu, un tel calcul ne pourrait être envisagé que pour une fréquence d'échantillonnage relativement élevée, de façon à ce que les échantillons sélectionnés présentent un écart de niveau le plus faible possible par rapport au seuil SE.

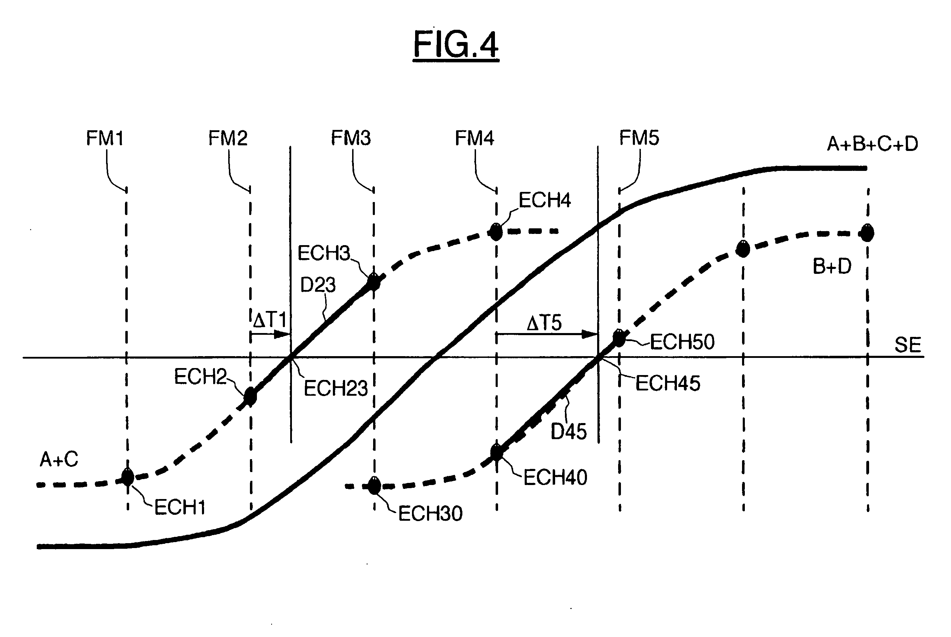

Ceci étant, pour augmenter encore la précision dans le calcul du déphasage, et notamment pour des applications dans lesquelles la fréquence du signal d'horloge est jugée trop faible, il est préférable de sélectionner également pour chaque signal secondaire un autre échantillon situé de l'autre côté du seuil SE, par rapport à l'échantillon précédemment sélectionné (figure 4).

Plus précisément, on sélectionne, en ce qui concerne le signal A+C, l'échantillon ECH3 définissant, avec l'échantillon ECH2, une transition montante du signal A+C. De même, on sélectionne, pour le signal B+D, l'échantillon ECH40 définissant, avec l'échantillon ECH50, également une transition montante du signal B+D.

Les moyens d'interpolation MIT1 et MIT2 effectuent alors une interpolation linéaire, classique connue en soi, entre les échantillons ECH2 et ECH3 d'une part, et entre les échantillons ECH40 et ECH50 d'autre part.

Par cette opération, les moyens d'interpolation MIT1 déterminent la distance temporelle ΔT1 séparant l'échantillon calculé ECH23 (situé à l'intersection de la droite D23 et du niveau SE) par rapport au front montant FM2 du signal d'horloge.

De même, les moyens d'interpolation MIT2 permettent de définir la distance temporelle ΔT5 séparant le front montant FM4 de l'échantillon calculé ECH45 situé à l'intersection de la droite D45 et du seuil SE.

On détermine en fait ici la phase du signal secondaire A+C par rapport au front montant FM2, ainsi que la phase du signal B+D par rapport au front montant FM4.

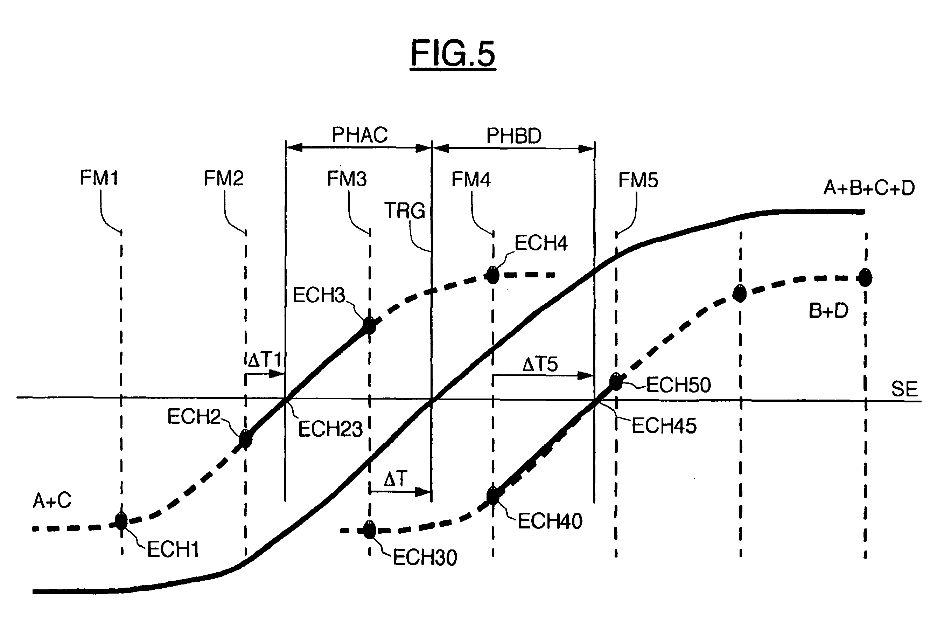

Les moyens de calcul MC peuvent alors aisément calculer (figure 5) la phase PHAC du signal A+C par rapport à la transition TRG du signal global qui forme la référence de phase, ainsi que la phase PHBD du signal B+D par rapport à cette référence de phase. On peut, à cet effet, utiliser par exemple les valeurs ΔT, ΔT1, ΔT5 et la valeur de la période du signal d'horloge d'échantillonnage.

Le déphasage mutuel DPH entre les signaux A+C et B+D est alors égal à la somme des phases PHAC et PHBD.

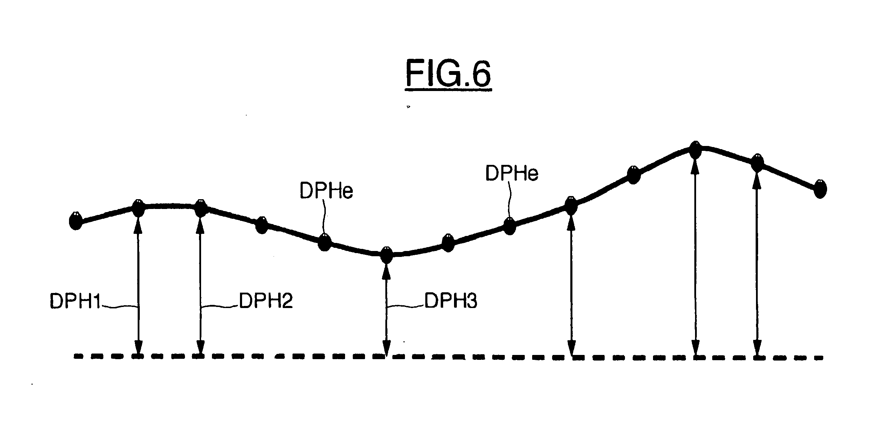

Les valeurs successives de déphasage DPHi entre les signaux A+C et B+D, calculées par les moyens MC, sont délivrées au filtre interpolateur FPB (figure 6). Ce filtre a notamment pour fonction de calculer par interpolation des valeurs de déphasage interpolées DPHe à partir de valeurs effectivement calculées par les moyens de calcul, lorsque ces valeurs de déphasage ne sont pas disponibles. C'est le cas par exemple lorsque l'un des signaux secondaires est momentanément inexploitable.

En d'autres termes, ce filtre FPB permet de délivrer de façon régulière des valeurs de déphasage, représentatives de l'erreur de positionnement du faisceau sur la piste, et qui vont permettre de corriger cette position et d'asservir en permanence le faisceau optique sur la piste du disque en rotation.

Sur les figures précédentes, on a volontairement, à des fins de simplification, représenté le signal global A+B+C+D au milieu des signaux A+C et B+D. Ceci étant, une dissymétrie entre la position des signaux secondaires par rapport à la position du signal global est possible en pratique et représentative d'un "mésalignement" local entre les quatre voies de traitement des quatre signaux élémentaires A, B, C et D. Ce mésalignement peut provenir de causes diverses, par exemple des parasites sur des câbles. Dans ce cas, l'invention permet de compenser ce mésalignement en agissant au niveau des moyens de prétraitement par exemple, par l'adjonction volontaire d'un petit décalage de phase appliqué sur l'un des signaux secondaires A+C ou B+D, décalage de phase proportionnel à l'erreur de symétrie observée entre les deux signaux A+C et B+D, par rapport au signal global.

L'utilisation selon l'invention du signal utile permet ainsi de s'affranchir de l'utilisation d'égaliseurs analogiques sur les voies de traitement des signaux élémentaires issus des photodétecteurs et de se servir de ce signal comme signal de référence pour la détermination du déphasage et donc de l'erreur de positionnement (et ce même pour des signaux sommés de faible amplitude et bruités).

Il est ainsi possible d'intégrer tous les composants des moyens de contrôle d'asservissement sur un même circuit qui est à même de s'adapter très facilement aux évolutions technologiques.

Bien entendu, la réalisation de moyens de traitement qui a été décrite plus haut de façon logicielle peut également être effectuée par des composants logiques sous forme de circuits intégrés en utilisant notamment des logiciels classiques de synthèse logique.

## Revendications

1. Procédé d'asservissement d'un faisceau optique incident sur une piste d'un support mobile d'informations contenues dans ladite piste, dans lequel on capte le faisceau réfléchi par le disque au moyen d'un capteur d'optique comportant plusieurs photodétecteurs (PHD) délivrant respectivement des signaux élémentaires (A, B, C, D), et dans lequel la détermination de l'erreur de positionnement (TE) du faisceau par rapport à la piste comporte une élaboration à partir desdits signaux élémentaires de deux signaux secondaires (A+C ; B+D) dont le déphasage mutuel est représentatif de ladite erreur de positionnement et d'un signal global égal à la somme (A+B+C+D) des signaux élémentaires, **caractérisé en ce que** le procédé comporte en outre un échantillonnage des deux signaux secondaires et une sélection des échantillons permettant la détermination du déphasage mutuel, en utilisant le signal global.

2. Procédé selon la revendication 1 **caractérisé par le fait qu'**on échantillonne les deux signaux secondaires à partir d'un signal d'horloge, on détecte les transitions (TRG) du signal global par rapport à un seuil prédéterminé en utilisant un signal d'échantillonnage auxiliaire obtenu à partir dudit signal d'échantillonnage et ayant une période (T_{PMC}) égale à un sous-multiple (n = 32) de la période Te du signal d'horloge d'échantillonnage, et on sélectionne au moins les deux échantillons (ECH2, ECH50) des deux signaux secondaires qui encadrent temporellement une transition (TRG) du signal global et dont les niveaux sont les plus proches dudit seuil (SE).

3. Procédé selon la revendication 2, **caractérisé par le fait qu'**on sélectionne pour chaque signal secondaire au moins deux échantillons (ECH2, ECH3; ECH40, ECH50) situés de part et d'autre dudit seuil prédéterminé et représentatifs pour chaque signal secondaire d'un franchissement dudit seuil par ledit signal secondaire dans le même sens que ladite transition du signal global, on effectue une interpolation (D23, D45) entre les deux échantillons sélectionnés de chaque signal secondaire de façon à déterminer, pour chaque signal secondaire, un échantillon (ECH23, ECH45) calculé dont le niveau correspond audit seuil, et on détermine l'erreur de positionnement à partir des deux échantillons calculés.

4. Dispositif d'asservissement d'un faiceau optique incident sur une piste d'un support mobile d'informations contenues dans ladite piste, comprenant un capteur (PHD) apte à capter le faisceau réfléchi par le disque et comportant plusieurs photodétecteurs, et des moyens de contrôle d'asservissement (DCA) aptes à déterminer l'erreur de positionnement du faisceau par rapport à la piste et comportant des moyens de prétraitement (MPT) aptes à élaborer à partir des signaux élémentaires respectivement délivrés par les photodétecteurs, deux signaux secondaires dont le déphasage mutuel est représentatif de l'erreur de positionnement du faisceau par rapport à la piste, ainsi qu'un signal global égal à la somme des signaux élémentaires, et **caractérisé en ce que** le dispositif comporte en outre
des moyens de traitement (MT) comportant des moyens d'échantillonnage aptes à échantillonner les deux signaux secondaires, des moyens de sélection (MSL1, MSL2) aptes à sélectionner les échantillons permettant la détermination du déphasage mutuel, en utilisant le signal global, et des moyens de calcul aptes à déterminer le déphasage mutuel à partir des échantillons sélectionnés.

5. Dispositif selon la revendication 4, **caractérisé par le fait que** les moyens de contrôle comportent un générateur générant un signal d'horloge d'échantillonnage, **par le fait que** les moyens d'échantillonnage comportent deux convertisseurs analogique/numérique (CAN1, CAN2) aptes à échantillonner les deux signaux secondaires à partir du signal d'horloge d'échantillonnage, **par le fait que** les moyens de traitement comportent une boucle numérique à verrouillage de phase (PMC) recevant le signal global et le signal d'échantillonnage et apte à détecter les transitions du signal global par rapport à un seuil prédéterminé, et **par le fait que** les moyens de sélection sont aptes à sélectionner au moins les deux échantillons des deux signaux secondaires qui encadrent temporellement une transition du signal global et dont les niveaux sont les plus proches dudit seuil (SE).

6. Dispositif selon la revendication 5, **caractérisé par le fait que** les moyens de sélection (MSL1, MSL2) sont aptes à sélectionner pour chaque signal secondaire au moins deux échantillons situés de part et d'autre dudit seuil prédéterminé et représentatifs pour chaque signal secondaire d'un franchissement dudit seuil par ledit signal secondaire dans le même sens que ladite transition du signal global, et **par le fait que** les moyens de traitement comportent des moyens d'interpolation (MIT1, MIT2) aptes à effectuer une interpolation entre les deux échantillons sélectionnés de chaque signal secondaire de façon à déterminer, pour chaque signal secondaire, un échantillon calculé dont le niveau correspond audit seuil, et **par le fait que** les moyens de calcul (MC) déterminent l'erreur de positionnement à partir des deux échantillons calculés.

7. Dispositif selon l'une des revendications 4 à 6, **caractérisé par le fait que** les moyens de traitement comportent un filtre interpolateur (FPB) relié à la sortie des moyens de calcul.

## Claims

1. Process for slaving an incident optical beam to a track of a mobile carrier of information contained in the said track, in which the beam reflected by the disc is picked up by means of an optical pickup comprising several photodetectors (PHD) respectively delivering elementary signals (A, B, C, D), and in which the determination of the positioning error (TE) of the beam with respect to the track comprises a formulation on the basis of said elementary signals of two secondary signals (A+C; B+D) whose mutual phase shift is representative of said positioning error and of an overall signal equal to the sum (A+B+C+D) of the elementary signals, **characterized in that** the method furthermore comprises a sampling of the two secondary signals and a selection of the samples allowing the determination of the mutual phase shift, using the overall signal.

2. Process according to Claim 1, **characterized in that** the two secondary signals are sampled on the basis of a clock signal, the transitions (TRG) of the overall signal with respect to a predetermined threshold are detected using an auxiliary sampling signal obtained from the said sampling signal and having a period (T_{PMC}) equal to a submultiple (n = 32) of the period Te of the sampling clock signal, and at least the two samples (ECH2, ECH50) of the two secondary signals which temporally flank a transition (TRG) of the overall signal and whose levels are closest to the said threshold (SE) are selected.

3. Process according to Claim 2, **characterized in that** for each secondary signal, at least two samples (ECH2, ECH3; ECH40, ECH50) are selected which are situated on either side of the said predetermined threshold and are representative for each secondary signal of a crossing of the said threshold by the said secondary signal in the same direction as the said transition of the overall signal, an interpolation (D23, D45) is performed between the two selected samples of each secondary signal so as to determine, for each secondary signal, a calculated sample (ECH23, ECH45) whose level corresponds to the said threshold, and the positioning error is determined from the two calculated samples.

4. Device for slaving an incident optical beam to a track of a mobile carrier of information contained in the said track, comprising a pickup (PHD) able to pick up the beam reflected by the disc and comprising several photodetectors, and slaving control means (DCA) able to determine the positioning error of the beam with respect to the track and comprising preprocessing means (MPT) able to formulate from the elementary signals delivered respectively by the photodetectors, two secondary signals whose mutual phase shift is representative of the positioning error of the beam with respect to the track, as well as an overall signal equal to the sum of the elementary signals, and
**characterized in that** the device also comprises processing means (MT) comprising sampling means able to sample the two secondary signals, selection means (MSL1, MSL2) able to select the samples allowing the determination of the mutual phase shift, by using the overall signal, and calculation means able to determine the mutual phase shift from the selected samples.

5. Device according to Claim 4, **characterized in that** the control means comprise a generator generating a sampling clock signal, **in that** the sampling means comprise two analogue/digital converters (CAN1, CAN2) able to sample the two secondary signals on the basis of the sampling clock signal, **in that** the processing means comprise a digital phase-lock loop (PMC) receiving the overall signal and the sampling signal and able to detect the transitions of the overall signal with respect to a predetermined threshold, and **in that** the selection means are able to select at least the two samples of the two secondary signals which temporally flank a transition of the overall signal and whose levels are the closest to the said threshold (SE).

6. Device according to Claim 5, **characterized in that** the selection means (MSL1, MSL2) are able to select for each secondary signal at least two samples situated on either side of the said predetermined threshold and representative for each secondary signal of a crossing of the said threshold by the said secondary signal in the same direction as the said transition of the overall signal, and **in that** the processing means comprise interpolation means (MIT1, MIT2) able to perform an interpolation between the two selected samples of each secondary signal so as to determine, for each secondary signal, a calculated sample whose level corresponds to the said threshold, and **in that** the calculation means (MC) determine the positioning error from the two calculated samples.

7. Device according to one of Claims 4 to 6, **characterized in that** the processing means comprise an interpolator filter (FPB) linked to the output of the calculation means.

## Patentansprüche

1. Verfahren zur Regelung eines optischen Strahls, der auf eine Spur eines mobilen Trägers von in der Spur enthaltenen Daten auftrifft, bei dem der von der Disk reflektierte Strahl mittels eines Optiksensors aufgefangen wird, der mehrere Photodetektoren (PHD) aufweist, die je Elementarsignale (A, B, C, D) liefern, und bei dem die Bestimmung des Positionierungsfehlers (TE) des Strahls bezüglich der Spur eine Erarbeitung, ausgehend von den Elementarsignalen, von zwei Sekundärsignalen (A+C; B+D), deren gegenseitige Phasenverschiebung für den Positionierungsfehler repräsentativ ist, und eines globalen Signals gleich der Summe (A+B+C+D) der Elementarsignale aufweist, **dadurch gekennzeichnet, dass** das Verfahren außerdem eine Abtastung der zwei Sekundärsignale und eine Auswahl der Tastproben aufweist, die die Bestimmung der gegenseitigen Phasenverschiebung erlaubt, unter Verwendung des globalen Signals.

2. Verfahren nach Anspruch 1, **dadurch gekennzeichnet, dass** die zwei Sekundärsignale ausgehend von einem Taktsignal abgetastet werden, dass die Übergänge (TRG) des globalen Signals bezüglich einer vorbestimmten Schwellwerts erfasst werden, indem ein Hilfsabtastsignal verwendet wird, das ausgehend von dem Tastsignal erhalten wird und eine Periode (T_{PMC}) gleich einem Untervielfachen (n = 32) der Periode Te des Abtast-Taktsignals hat, und mindestens die zwei Tastproben (ECH2, ECH50) der zwei Sekundärsignale ausgewählt werden, die zeitlich einen Übergang (TRG) des globalen Signals umrahmen und deren Pegel dem Schwellwert (SE) am nächsten sind.

3. Verfahren nach Anspruch 2, **dadurch gekennzeichnet, dass** für jedes Sekundärsignal mindestens zwei Tastproben (ECH2, ECH3; ECH40, ECH50) ausgewählt werden, die sich zu beiden Seiten des vorbestimmten Schwellwerts befinden und, für jedes Sekundärsignal, für eine Überschreitung des Schwellwerts durch das Sekundärsignal in der gleichen Richtung wie der Übergang des globalen Signals repräsentativ sind, dass eine Interpolation (D23, D45) zwischen den zwei ausgewählten Tastproben jedes Sekundärsignals durchgeführt wird, um für jedes Sekundärsignal eine berechnete Tastprobe (ECH23, ECH45) zu bestimmen, deren Pegel dem Schwellwert entspricht, und der Positionierungsfehler ausgehend von den zwei berechneten Tastproben bestimmt wird.

4. Vorrichtung zur Regelung eines optischen Strahls, der auf eine Spur eines mobilen Trägers von in der Spur enthaltenen Daten auftrifft, mit einem Sensor (PHD), der den von der Disk reflektierten Strahl auffangen kann und mehrere Photodetektoren aufweist, und mit Einrichtungen zur Regelungsüberwachung (DCA), die den Positionierungsfehler des Strahls bezüglich der Spur bestimmen können und Vorverarbeitungseinrichtungen (MPT) aufweisen, die ausgehend von den jeweils von den Photodetektoren gelieferten Sekundärsignalen zwei Sekundärsignale, deren gegenseitige Phasenverzögerung für den Positionierungsfehler des Strahls bezüglich der Spur repräsentativ ist, sowie ein globales Signal gleich der Summe der Elementarsignale erarbeiten können, und **dadurch gekennzeichnet, dass** die Vorrichtung außerdem Verarbeitungseinrichtungen (MT) aufweist, die Abtasteinrichtungen, welche die zwei Sekundärsignale abtasten können, Auswahleinrichtungen (MSL1, MSL2), die die Tastproben auswählen können, die die Bestimmung der gegenseitigen Phasenverschiebung ermöglichen, indem das globale Signal verwendet wird, und Recheneinrichtungen aufweisen, die die gegenseitige Phasenverschiebung ausgehend von den ausgewählten Tastproben bestimmen können.

5. Vorrichtung nach Anspruch 4, **dadurch gekennzeichnet, dass** die Überwachungseinrichtungen einen Generator aufweisen, der ein Abtast-Taktsignal erzeugt, dass die Abtasteinrichtungen zwei Analog/Digital-Wandler (CAN1, CAN2) aufweisen, die die zwei Sekundärsignale ausgehend von dem Abtast-Taktsignal abtasten können, dass die Verarbeitungseinrichtungen eine digitale Phasenverriegelungsschleife (PMC) aufweisen, die das globale Signal und das Tastsignal empfängt und die Übergänge des globalen Signals bezüglich eines vorbestimmten Schwellwerts erfassen kann, und dass die Auswahleinrichtungen mindestens die zwei Tastproben der zwei Sekundärsignale auswählen können, die zeitlich einen Übergang des globalen Signals umrahmen und deren Pegel dem Schwellwert (SE) am nächsten sind.

6. Vorrichtung nach Anspruch 5, **dadurch gekennzeichnet, dass** die Auswahleinrichtungen (MSL1, MSL2) für jedes Sekundärsignal mindestens zwei Tastproben auswählen können, die sich zu beiden Seiten des vorbestimmten Schwellwerts befinden und, für jedes Sekundärsignal, für ein Überschreiten des Schwellwerts durch das Sekundärsignal in gleicher Richtung wie der Übergang des globalen Signals repräsentativ sind, und dass die Verarbeitungseinrichtungen Interpolationseinrichtungen (MIT1, MIT2) aufweisen, die eine Interpolation zwischen den zwei ausgewählten Tastproben jedes Sekundärsignals durchführen können, um für jedes Sekundärsignal eine berechnete Tastprobe zu bestimmen, deren Pegel dem Schwellwert entspricht, und dass die Recheneinrichtungen (MC) den Positionierungsfehler ausgehend von den zwei berechneten Tastproben bestimmen.

7. Vorrichtung nach einem der Ansprüche 4 bis 6, **dadurch gekennzeichnet, dass** die Verarbeitungseinrichtungen ein Interpolationsfilter (FPB) aufweisen, das mit dem Ausgang der Recheneinrichtungen verbunden ist.
